**Europäisches Patentamt**

**European Patent Office**

**Office européen des brevets**

(11) Veröffentlichungsnummer: **0 155 398**
A2

# (12) EUROPÄISCHE PATENTANMELDUNG

(21) Anmeldenummer: **84115835.5**

(22) Anmeldetag: **19.12.84**

(51) Int. Cl.⁴: **G 01 F 11/24**
**B 65 B 1/36**

(30) Priorität: **23.12.83 DE 3346783**

(43) Veröffentlichungstag der Anmeldung:
**25.09.85 Patentblatt 85/39**

(84) Benannte Vertragsstaaten:
**FR GB**

(71) Anmelder: **Pfister GmbH**
**Stätzlinger Strasse 70**
**D-8900 Augsburg(DE)**

(72) Erfinder: **Häfner, Hans W.**
**Fichtenweg 15**
**D-8890 Aichach-Walchshofen(DE)**

(74) Vertreter: **Kahler, Kurt, Dipl.-Ing.**
**Raiffeisenstrasse 4**
**D-8931 Walkertshofen(DE)**

(54) **Volumetrische Dosiereinrichtung.**

(57) Die Einrichtung zum volumetrischen Dosieren von Schüttgut besitzt eine eine Füllöffnung aufweisende Kammer aus einem luftdurchlässigen Material, die in einem dreh- oder kippbaren, die Füllöffnung freigebenden luftdichten Behälter angeordnet ist, der an eine Luftabsaugvorrichtung anschließbar ist.

EP 0 155 398 A2

Croydon Printing Company Ltd.

Volumetrische Dosiereinrichtung

B e s c h r e i b u n g

Die Erfindung betrifft eine Einrichtung zum volumetrischen Dosieren von Schüttgut, insbesondere Leichtschüttgut, gemäß dem Oberbegriff des Patentanspruchs 1.

Bei bekannten volumetrischen Dosiereinrichtungen wird eine Dosierkammer durch einen Raum gebildet, der in einem annähernd senkrechten Rohr zwischen einem Zuführmundstück und einer Entleerungsöffnung durch zwei quer zum Rohr verlaufende Schieber definiert wird. Zum Einfüllen wird der obere Schieber geöffnet und der untere bleibt geschlossen. Nach gefüllter Kammer wird der obere Schieber geschlossen und der untere zur Entleerung geöffnet. Unterschiedliche Volumina werden durch seitliches Ansetzen von Verdrängungskörpern in die Dosierkammer erreicht. Gerade bei Leichtschüttgütern, wie Styropor oder Perlit, ergeben sich beim Einfüllen aufgrund der von Umgebungsbedingungen sich ändernden Fließfähigkeit erhebliche Meßungenauigkeiten. Für die Schieberbetätigung ist ein erheblicher Kraftaufwand zur Überwindung der Reibung erforderlich und die in die Dosierkammer eingesetzten Verdrängungskörper liegen im Flußweg des Schüttguts, so daß sie dessen Fluß beeinträchtigen können.

Der Erfindung liegt die Aufgabe zugrunde, eine Einrichtung zum volumetrischen Dosieren von Schüttgut, insbesondere Leichtschüttgut, der gattungsgemäßen Art anzugeben, das bei niedrigen Herstellungskosten und hoher Funktionssicherheit eine bessere Meßgenauigkeit und Reproduzierbarkeit als bisher besitzt.

Diese Aufgabe wird erfindungsgemäß gelöst durch eine Einrichtung mit den Merkmalen des Kennzeichens des Patentanspruchs 1.

Da das Schüttgut in der Füllphase angesaugt wird, ergibt sich eine äußerst regelmäßige Schüttgutdichte. Die Einrichtung besitzt nur ein bewegtes Teil, ist staubdicht und verschleißarm. Es sind bei guter Meßgenauigkeit und Reproduzierbarkeit hohe Arbeitsgeschwindigkeiten möglich.

Bevorzugte Weiterbildungen der erfindungsgemäßen Einrichtung sind in den Unteransprüchen gekennzeichnet.

Ein Ausführungsbeispiel der Erfindung wird nachstehend anhand der Zeichnung erläutert. Es zeigen

Fig. 1          die Ausführungsform der erfindungsgemäßen Einrichtung in Seitenansicht und

Fig. 2          die Einrichtung nach Fig. 1 in einer gegenüber der Darstellung in Fig. 1 um 90° gedrehten Seitenansicht.

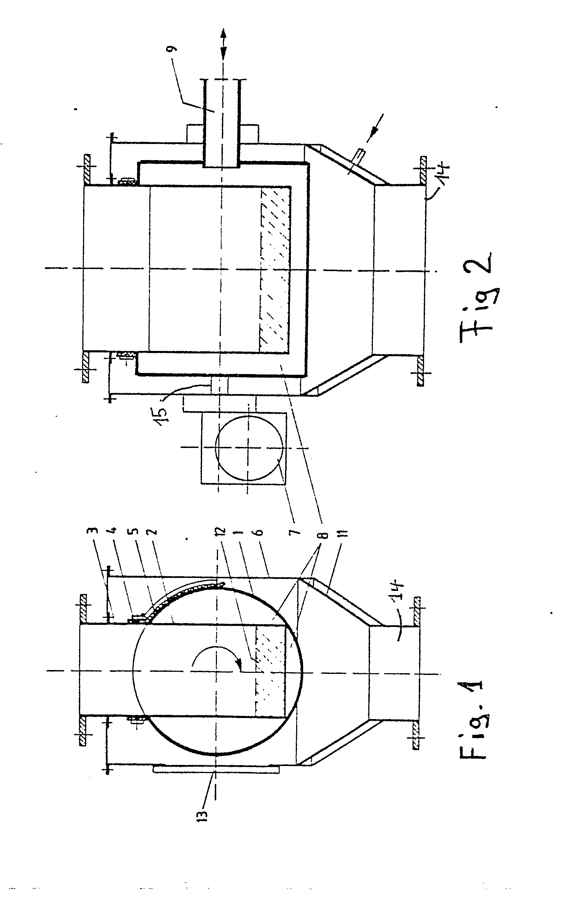

Gemäß den Figuren 1 und 2 ist in einem zylindrischen Behälter 1 eine Meßkammer 2 eingesetzt. Der zylindrische Behälter 1 ist mit seiner Längsachse horizontal in einem Staubschutzgehäuse 6 gelagert und besitzt eine Öffnung, durch die die Meßkammer 2 in das Innere des Behälters 1 passend eingesetzt ist.

Die Meßkammer 2 besteht aus luftdurchlässigem Material, vorzugsweise Sintermetall. Zur Veränderung des Volumens können Verdrängungskörper 12 am Boden der Meßkammer 2 eingeschraubt werden. Hierzu ist seitlich am Staubschutzgehäuse 6 eine Klappe 13 angebracht, durch die die Verdrängungskörper bei in Ausrichtung mit der Klappe 13 verdrehter Meßkammer 2 eingesetzt werden können.

Von oben ist in das Staubschutzgehäuse ein Zuführmundstück 3 angesetzt, das bei aufrechtstehender Meßkammer 2 mit der

Öffnung im Behälter 1 und damit mit der Meßkammer 2 vorzugsweise fluchtet. Das Staubschutzgehäuse 6 weist nach unten eine Entleerungsöffnung 14 auf, über die die Meßkammer 2 entleert werden kann.

Der Behälter 1 ist um seine Rotationsachse mittels eines Antriebs drehbar, der beim Ausführungsbeispiel aus einem Schneckengetriebemotor 7 besteht, der über einen Wellenstutzen 15 mit der einen Stirnwand des Behälters 1 verbunden ist, während dessen andere Stirnwand mit einer Hohlwelle 9 versehen ist, die gleichzeitig als Verbindung des Behälterinneren 8 mit einer nichtgezeigten Luftabsaugvorrichtung und einer Luftzuführvorrichtung dient.

Die Unterkante des Zuführmundstücks 3 ist gegenüber dem Behälter 1 mittels Dichtleisten 4 und einer sich in Drehrichtung des Behälters 1 an dessen Außenmantel federnd anliegenden Dichtklappe 5 abgedichtet, die vorzugsweise selbstnachstellend ist.

Zur Entleerungsöffnung 14 hin ist das Staubschutzgehäuse 6 trichterförmig ausgebildet, wobei die Schrägflächen mit Belüftungsplatten 11 versehen sein können, über die unter Luftzuführung Schüttgutablagerungen vermieden werden.

In Betrieb wird über das Zuführmundstück 3 Schüttgut in die Meßkammer 2 eingebracht. Bei gefüllter Meßkammer 2 wird der Schneckengetriebemotor 7 in Betrieb gesetzt und der Behälter 1 um vorzugsweise 180° im Uhrzeigersinn (Fig. 1) gedreht, so daß sich die Meßkammer 2 vollständig entleert und das Schüttgut durch die Entleerungsöffnung 14 fällt. Durch Weiterdrehen oder Zurückdrehen in die ursprüngliche Lage wird dann die Meßkammer wieder in Gegenüberstellung zu dem Zuführmundstück 3 gebracht.

Wesentlich ist dabei, daß in der Füllposition der Meßkammer 2 ein Unterdruck in dem Inneren 8 des Behälters 1 durch Absaugen von Luft durch den Anschluß 9 erzeugt wird, so daß aufgrund der Luftdurchlässigkeit der Meßkammer 2 in dieser ein konstanter Unterdruck entsteht, der eine optimale und rasche Schüttgutfüllung mit reproduzierbarer Dichte gewährleistet. Andererseits wird nach Drehen des Behälters 1 in die Entleerungsposition das Behälterinnere 8 mit Über-druck über den Anschluß 9 belegt, so daß die Meßkammer 2 vollständig entleert wird.

Für eine automatische Steuerung kann das Anlegen von Unterdruck bzw. Überdruck durch vom Drehwinkel des Behälters 1 betätigte Schalter ausgelöst werden. Der gesamte Füll- und Entleerungsvorgang kann entweder kontinuierlich erfolgen oder aber jeweils eine volle Umdrehung mit einer zeitgesteuerten Unterbrechung für die Füllung der Meßkammer 2 durchgeführt werden.

PFISTER GmbH,  H 83/18-KK-57
Stätzlinger Straße 70,
8900 Augsburg

P a t e n t a n s p r ü c h e

1. Einrichtung zum volumetrischen Dosieren von Schüttgut, insbesondere Leichtschüttgut, mit einer eine Füllöffnung aufweisenden Meßkammer, dadurch g e k e n n - z e i c h n e t , daß die Meßkammer (2) aus einem luftdurchlässigen Material besteht und in einem dreh- oder kippbaren, die Füllöffnung freigebenden luftdichten Behälter (1) angeordnet ist, der an eine Luftabsaugvorrichtung (9) anschließbar ist.

2. Einrichtung nach Anspruch 1, dadurch g e k e n n - z e i c h n e t , daß die Meßkammer (2) zumindest teilweise aus Sintermetall besteht.

3. Einrichtung nach Anspruch 1 oder 2, dadurch g e - k e n n z e i c h n e t , daß der Behälter (1) mit einer Luftzuführvorrichtung (9) verbindbar ist.

4. Einrichtung nach Anspruch 3, dadurch g e k e n n - z e i c h n e t , daß die Luftabsaugvorrichtung und die Luftzuführvorrichtung mit dem Behälter (1) über den gleichen Anschluß (9) verbindbar sind.

5. Einrichtung nach Anspruch 4, dadurch g e k e n n - z e i c h n e t , daß der Anschluß (9) ein als Hohlwelle ausgebildeter in Richtung der Rotationsachse des Behälters (1) an diesem angesetzter Stutzen ist.

6. Einrichtung nach einem der Ansprüche 1 bis 5, dadurch g e k e n n z e i c h n e t , daß der Behälter (1) in einem Staubschutzgehäuse (6) gelagert ist, das nach unten eine Entleerungsöffnung (14) für die Meßkammer (2) besitzt.

7. Einrichtung nach Anspruch 6, dadurch g e k e n n - z e i c h n e t , daß an der Oberseite des Staubschutzgehäuses (6) ein Zuführmundstück (3) angebracht ist, das gegenüber dem Behälter (1) abgedichtet ist.

8. Einrichtung nach Anspruch 7, dadurch g e k e n n - z e i c h n e t , daß in Drehrichtung des als Trommel ausgebildeten Behälters (1) am unteren Ende des Zuführmundstücks (3) anliegend am Behälter (1) eine sich selbstnachstellende Abdichtklappe (5) angebracht ist.

9. Einrichtung nach einem der Ansprüche 1 bis 8, dadurch g e k e n n z e i c h n e t , daß das Volumen der Meßkammer (2) durch Einsetzen von Verdrängungskörpern (12) veränderbar ist.

10. Einrichtung nach einem der Ansprüche 6 bis 9, dadurch g e k e n n z e i c h n e t , daß am Staubschutzge-

häuse (6) abdeckbare Öffnungen zur Reinigung und/oder Auswechslung der Verdrängungskörper vorgesehen sind.

11. Einrichtung nach einem der Ansprüche 1 bis 10, dadurch g e k e n n z e i c h n e t , daß die Drehung des Behälters (1) mittels eines Schneckengetriebemotors (7) erfolgt.

12. Einrichtung nach einem der vorhergehenden Ansprüche, dadurch g e k e n n z e i c h n e t , daß das Anlegen von Unter- und/oder Überdruck mittels von der Drehstellung des Behälters (1) betätigten Schaltern steuerbar ist.

13. Einrichtung nach Anspruch 11 oder 12, dadurch g e - k e n n z e i c h n e t , daß der Füll- und Entleerungsvorgang kontinuierlich oder mit Unterbrechung nach jeweils einer Umdrehung erfolgt.

Fig. 1

Fig 2